# EUROPÄISCHE PATENTSCHRIFT

(11) **EP 0 645 269 B1**
(45) Veröffentlichungstag und Bekanntmachung des Hinweises auf die Patenterteilung: **24.09.1997**
(21) Anmeldenummer: 94111753.3
(22) Anmeldetag: 28.07.1994
(51) Int. Cl.: B60J 7/08

(54) **Dachluke im Dach eines Nutzfahrzeuges**
Roof hatch for utility vehicles
Trappe pour un toit de véhicule utilitaire

(30) Priorität: 23.09.1993 DE 4332369
(43) Veröffentlichungstag der Anmeldung: 29.03.1995
(73) Patentinhaber: MAN Nutzfahrzeuge Aktiengesellschaft, 80976 München (DE)
(72) Erfinder: Kneifel, Eberhard, Dipl.-Ing., D-89250 Senden (DE); Watzek, Gerhard, D-80935 München (DE)

(56) Entgegenhaltungen:
- EP-A- 0 451 583
- DE-A- 3 503 806
- FR-A- 1 379 441

## Beschreibung

Die Erfindung bezieht sich auf eine Dachluke im Dach eines Nutzfahrzeuges, insbesondere im Fahrerhausdach eines Lkw, deren Dachlukendeckel über mechanische, elektrische, pneumatische oder hydraulische Elemente ausstellbar und im geschlossenen Zustand mittels einer elastischen Dichtung gegen die Dachhaut abgedichtet ist.

Es sind diverse Dachluken-Systeme bekannt, deren Dachlukendeckel mechanisch, elektrisch, pneumatisch oder hydraulisch betätigt werden können, die einseitig scharniert oder in mehreren Stellungen ausstellbar oder aber gleichzeitig ausstellbar und verschiebbar sind. Allen diesen Systemen haftet der Mangel an, daß sie über der Dachfläche überstehen, ob nun mit hochstehendem Blechrand an der Dachhaut oder auf ihr plan dichtend.

Schiebedachanordnungen mit nach innen gezogenen Schiebedachrahmen weisen einen sehr komplizierten Wasserablauf auf, der über Rohre von dem Schiebedachrahmen durch das Innere des Fahrzeuges nach außen wegführt.

Aus der US-A-4 541 665 ist eine Dachluke im Dach eines Fahrzeuges bekannt, deren Dachlukendeckel über mechanische Elemente ausstellbar und im geschlossenen Zustand mittels einer elastischen Dichtung gegen die Dachhaut abgedichtet ist. Dabei ist der Dachlukendeckel im geschlossen Zustand auf Höhe der Dachhaut und ohne Überstand zu derselben versenkt angeordnet.

Der Erfindung liegt die Aufgabe zugrunde, ein Fahrerhausdach mit organisch integriertem Dachlukendeckel bei sicher und einfach gestaltetem Wasserablauf zu schaffen.

Dies wird erfindungsgemäß dadurch erreicht, daß die Dachhaut im Mittenbereich eine Öffnung mit einer innerhalb der Dachkontur angeordneten, nach außen U-förmig konfigurierten, umlaufenden Versickung aufweist, deren innerer vertikaler U-Steg von dem Randbereich des Dachlukendeckels unter Einschluß einer elastischen Dichtung klemmend übergriffen ist und die umlaufende Versickung in der Dachhaut in Fahrzeuglängsrichtung nach vorne und/oder hinten der Dachform entsprechende offene Sickenausläufe aufweisen. Solcherart entsteht, auch unter Integration einer Dachluke, ein geschlossenes Erscheinungsbild des Daches, wobei durch die Versickung an der Öffnung der Dachhaut eine ausgezeichnete Versteifung der Dachhaut erzielt wird. So können außerdem teurere innen liegende Gerippeteile eingespart werden. Indem die durch die Versickung gebildete umlaufende Rinne, je nach Dachform und Gefälle, nach vorne oder hinten offen ausgebildet ist, kann das Wasser bei Regen oder beim Waschen des Fahrzeuges problemlos ablaufen. Somit haben die sickenförmigen Rinnen eine Doppelfunktion, nämlich eine enorme Versteifung der Dachhaut, was in verschiedener Hinsicht vorteilhaft ist (akustische Verbesserung, Begehbarkeit, Unfallverhalten) und einen problemlosen Wasserablauf, wobei die Optik des Fahrzeugdaches keinen Schaden leitet.

Nachstehend ist die Erfindung anhand eines in der Zeichnung dargestellten Ausführungsbeispieles näher erläutert.

Es zeigen:
- Fig. 1: eine Seitenansicht eines Fahrerhausdaches mit Dachluke und nach vorne ablaufender Regenrinne,
- Fig. 2: die Draufsicht gemäß Fig. 1,
- Fig. 3: eine Seitenansicht eines Fahrerhausdaches mit Dachluke und nach hinten ablaufender Regenrinne,
- Fig. 4: die Draufsicht gemäß Fig. 3,
- Fig. 5: den Schnitt A - B, gemäß den Figuren 2 und 4.

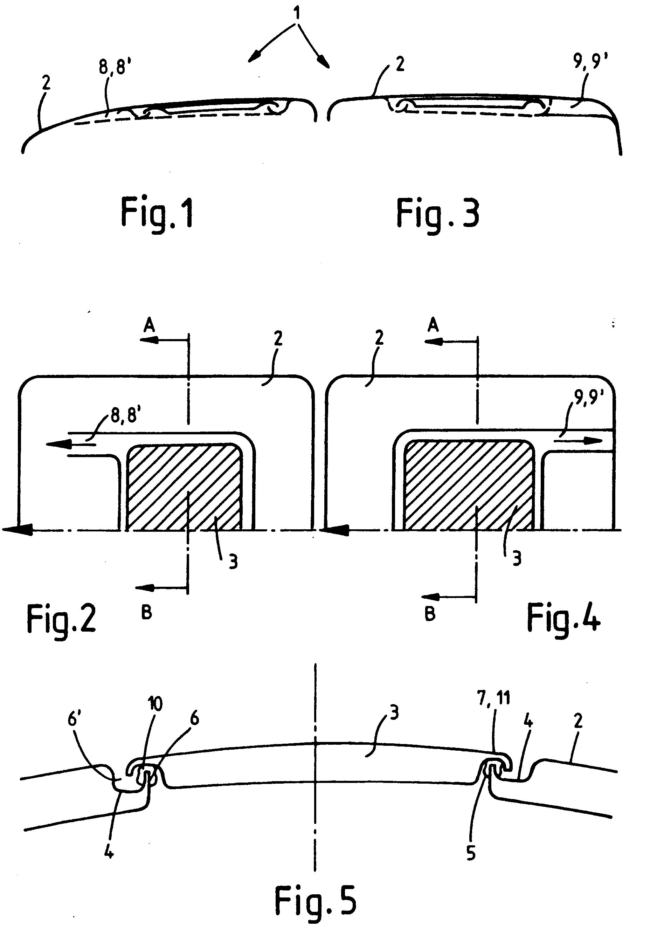

Die Fig. 1 und 2 wie auch die Fig. 3 und 4 zeigen die Seitenansicht und die Draufsicht eines Daches 1 eines Fahrzeuges bzw. das Fahrerhausdach von einem Lkw mit einer im Mittenbereich der Dachhaut 2 vorgesehenen Öffnung 5, in der ein Dachlukendeckel 3 einliegt.

Wie in Fig. 5 gezeigt, weist die Dachhaut 2 in ihrem Mittenbereich eine Öffnung 5 mit einer innenseitig umlaufenden U-förmig ausgebildeten Sicke 4 auf. Die Sicke 4 liegt innenseitig der Dachkontur, wobei der innenseitig nach oben weisende U-Steg 6 der Sicke 4 von dem Randbereich des Dachlukendeckels 3 unter Einschluß einer Dichtung 10 klemmend übergriffen ist. Der Randbereich 7 kann auch als U-förmige Sicke 11 ausgebildet sein. Um einen sicheren Regenablauf zu gewährleisten, können entsprechend den Fig. 1 und 2 nach vorne ablaufende Sickenabläufe 8, 8' und/oder gemäß den Fig. 3 und 4 nach hinten ablaufende Sickenabläufe 9, 9' vorgesehen sein. Die den Regen abführenden Sickenabläufe sind der Dachkontur entsprechend ausgebildet.

### Bezugszeichenliste

- 1: Dach eines Nutzfahrzeuges, Fahrerhaus von Lkw
- 2: Dachhaut
- 3: Dachlukendeckel
- 4: U-förmige Versickung an Öffnung in 2
- 5: Öffnung in 2
- 6, 6': U-Stege von 4
- 7: Randbereich von 3
- 8, 8': offener Sickenauslauf vorne
- 9, 9': offener Sickenauslauf hinten
- 10: elastische Dichtung
- 11: U-förmige Sicke an 7

## Patentansprüche

1. Dachluke im Dach eines Nutzfahrzeuges, insbesondere im Fahrerhausdach eines Lkw, deren Dachlukendeckel (3) über Elemente ausstellbar und im geschlossenen Zustand mittels einer elastischen Dichtung (10) gegen die Dachhaut (2) abgedichtet ist, wobei der Dachlukendeckel (3) im geschlossenen Zustand auf Höhe der Dachhaut (2) und ohne Überstand zu derselben versenkt angeordnet ist, dadurch gekennzeichnet, daß die Dachhaut (2) im Mittenbereich eine Öffnung (5) mit einer innerhalb der Dachkontur angeordneten, nach außen U-förmig konfigurierten, umlaufenden.Versickung (4) aufweist, deren innerer vertikaler U-Steg (6) von dem Randbereich (7) des Dachlukendeckels (3) unter Einschluß einer elastischen Dichtung (10) klemmend übergriffen ist und die umlaufende Versickung (4) in der Dachhaut (2) in Fahrzeuglängsrichtung nach vorne und/oder hinten der Dachform entsprechende offene Sickenausläufe (8, 8'; 9, 9') aufweisen.

2. Dachluke nach Anspruch 1, dadurch gekennzeichnet, daß der Dachluken-Randbereich (7) eine umlaufende U-förmige Sicke (11) aufweist.

## Claims

1. Roof hatch in the roof of a commercial vehicle, particularly in the roof of a truck cab, the roof hatch cover (3) of which roof hatch can be raised via elements and sealed against the roof panel (2) in the closed condition by means of an elastic seal (10), the roof hatch cover (3) in the closed condition being arranged recessed at the height of the roof panel (2) and without protrusion with regard to the latter, characterised in that the roof panel (2) has in the centre area an opening (5) with a circumferential bead (4) which is arranged within the roof contour and outwardly configured in a U shape, the inner vertical web (6) of which U-shape is overlapped in a clamping manner by the edge area (7) of the roof hatch cover (3) with the inclusion of an elastic seal (10), and that the circumferential bead (4) in the roof panel (2) has open bead extensions (8, 8'; 9, 9') running towards the front and/or the rear depending on the roof shape.

2. Roof hatch according to Claim 1, characterised in that the edge area (7) of the roof hatch has a circumferential U-shaped bead (11).

## Revendications

1. Toit ouvrant pour toit de véhicule utilitaire notamment pour toit de cabine de camion dont le panneau de toit ouvrant (3) peut se dégager par des éléments et est rendu étanche à l'état fermé par un joint élastique (10) contre le voile de toit (2), le panneau (3) du toit ouvrant à l'état fermé, étant au niveau du voile de toit (2), de façon encastrée sans déborder de celui-ci,
caractérisé en ce que
le voile de toit (2) comporte dans la zone centrale, une ouverture (5) avec, à l'intérieur du contour du toit, une rainure périphérique (4) à section en forme de U, tournée vers l'extérieur et dont la branche verticale intérieure (6) est chevauchée, de manière à pincer un joint élastique interposé (10), par la zone de bord (7) du panneau de toit ouvrant (3), et la rainure périphérique (4) comporte des sorties de rainure (8, 8' ; 9, 9') ouvertes vers l'avant et/ou vers l'arrière de la forme de toit selon la direction longitudinale du véhicule.

2. Toit ouvrant selon la revendication 1,
caractérisé en ce que
la zone du bord de panneau (7) présente une rainure périphérique (11) à section en forme de U.
